# EUROPÄISCHE PATENTANMELDUNG

(11) **EP 4 180 368 A1**
(43) Veröffentlichungstag der Anmeldung: **17.05.2023**
(21) Anmeldenummer: 22206615.1
(22) Anmeldetag: 10.11.2022
(51) Int. Cl.: B65G 47/86

(54) **KLAMMERVORRICHTUNG UND TRANSPORTVORRICHTUNG**

(30) Priorität: 12.11.2021 DE 102021129518
(71) Anmelder: KRONES AG, 93073 Neutraubling (DE)
(72) Erfinder: LEIDEL, Marco, 93073 Neutraubling (DE)
(74) Vertreter: v. Bezold & Partner Patentanwälte - PartG mbB

(57) **Zusammenfassung**

Die Erfindung betrifft u.a. eine Klammervorrichtung (10) zum Halten eines Behälters (12) für eine Behälterbehandlungsanlage. Ein erstes Klammerarmpaar (14) und ein zweites Klammerarmpaar (16) sind zum gleichzeitigen Halten des Behälters (12) übereinander angeordnet. Eine erste Antriebseinheit (20) ist zum Betätigen des ersten Klammerarmpaares (14) in Wirkverbindung mit dem ersten Klammerarmpaar (14), und eine zweite Antriebseinheit (22) ist zum Betätigen des zweiten Klammerarmpaares (16) in Wirkverbindung mit dem zweiten Klammerarmpaar (16). Vorteilhaft kann die Klammervorrichtung (10) bspw. besonders flexibel und bauraumsparend sein.

## Beschreibung

### Technisches Gebiet

Die Erfindung betrifft eine Klammervorrichtung zum Halten eines Behälters und eine Transportvorrichtung zum Transportieren von Behältern.

### Technischer Hintergrund

In Behälterbehandlungsanlagen zum Herstellen, Reinigen, Füllen, Verschließen usw. von Behältern können Behälter mittels Greifer- bzw. Klammervorrichtungen gehalten und durch die Anlage transportiert werden.

Herkömmlich werden Multifunktionsgarnituren in Form von Klammersternen zum Behältertransport in Behälterbehandlungsanlagen mechanisch betätigt. Diese Betätigung geschieht beispielsweise mittels Rollen die per Kurve angesteuert werden. Eine Nockenansteuerung ist ebenfalls möglich. Weiterhin sind für die Haltekrafterzeugung zur Behälterarretierung herkömmlich Federelemente erforderlich. Diese können beispielsweise in die Klammervorrichtungen selbst integriert sein oder durch separate Federn ausgeführt sein.

Nachteile der herkömmlichen Technik können beispielsweise darin liegen, dass mechanische Bauteile, die auf einer rotierenden Achse (Rundläufer) angebracht sind, einem extremen Verschleiß unterliegen. Dieser Verschleiß kommt von dem Betätigungsmechanismus der jeweiligen Variante. Weiterhin ist die Kraft zur Haltekrafterzeugung durch das vordefinierte Federelement einmal ausgelegt und nicht ohne Bauteiltausch zu variieren. Das Variieren erfordert ein aufwändiges Umrüsten. Mit herkömmlichen Lösungen können ebenfalls keine unterschiedlichen Durchmesser an Behältern gegriffen werden. Eingezogene, bauchige, konische etc. Behälter können nur unter großem Aufwand oder gar nicht von Multigarnituren im nicht-zylindrischen Bereich gehalten werden. Konturierte Flaschen werden folglich sehr weit unten gegriffen oder bewusste Fehlgriffe werden in Kauf genommen, was große Auswirkungen auf Produktqualität und Prozesssicherheit hat.

Die DE 10 2014 005 321 A1 offenbart eine Transportvorrichtung zum Transportieren und Handhaben von Behältern, wobei die Behälter von der Transportvorrichtung in einer Transportrichtung von einer Eingabestelle zu einer Ausgabestelle transportiert werden. Die Transportvorrichtung weist wenigstens eine sich in Transportrichtung bewegende Handhabungseinrichtung zur Handhabung eines oder mehrerer der Behälter auf. Die Transporteinrichtung weist wenigstens einen Motor auf, mittels dem die wenigstens eine Handhabungseinrichtung motorisch in einer von der Transportrichtung abweichenden Richtung bewegbar ist.

Der Erfindung liegt die Aufgabe zu Grunde, eine verbesserte Technik zum Halten von Behältern zu schaffen, die vorzugsweise besonders variabel ist, nur einem geringen Verschleiß unterliegt und/oder ermöglicht, Behälter prozesssicher und beschädigungsfrei zu halten, deren Mantelfläche unterschiedlich geformt/dimensioniert sind.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft eine Klammervorrichtung zum Halten eines Behälters für eine Behälterbehandlungsanlage. Die Klammervorrichtung weist ein erstes Klammerarmpaar und ein zweites Klammerarmpaar auf, die zum gleichzeitigen Halten des Behälters übereinander angeordnet sind (z. B. doppelstöckig). Die Klammervorrichtung weist eine erste Antriebseinheit auf, die zum Betätigen (z. B. Öffnen und/oder Schließen) des ersten Klammerarmpaares in Wirkverbindung mit dem ersten Klammerarmpaar ist. Die Klammervorrichtung weist eine zweite Antriebseinheit auf, die zum Betätigen (z. B. Öffnen und/oder Schließen) des zweiten Klammerarmpaares in Wirkverbindung mit dem zweiten Klammerarmpaar ist (z. B. unabhängig von der ersten Antriebseinheit und/oder der Wirkverbindung zwischen der ersten Antriebseinheit und der zweiten Antriebseinheit).

Vorteilhaft können die beiden Antriebseinheiten ermöglichen, dass die Klammerarmpaare an jeder beliebigen Stelle bzw. zu jedem beliebigen Zeitpunkt geöffnet und geschlossen werden können. Dieser Vorteil kann die Übergabe der Behälter optimieren. Es müssen keine Kompromisse durch einmalig eingestellte Ansteuerelemente mehr eingegangen werden. Jeder Behälter kann optimal auf seinen radial besten Übergabepunkt behälterformatabhängig eingestellt werden. Auch können besondere Funktion des Behältertransports, wie bspw. die gezielte Behälterausleitung und das Verteilen der Behälter auf unterschiedliche Anschlussstationen, sehr einfach realisiert werden. Die Haltekraft, mit der der Behälter gehalten wird, kann auf einfache Weise variiert werden. Beispielsweise kann in Abhängigkeit von Gewicht, Größe und Durchmesser ein frei wählbarer Wert zur Haltkraft festgelegt werden. Es kann sich ein schonendes Behälterhandling und ein verringerter Maschinenverschleiß ergeben. Zudem kann eine Auslastung des Antriebs (Drehmoment, Stromaufnahme, Schleppfehler usw.), der die Transportvorrichtung, an der die Klammervorrichtung befestigt ist, bewegt, wesentlich reduziert werden, da keine mechanische Ansteuerung über Rollen oder Nocken mitangetrieben werden muss. Lediglich das Trägheitsmoment aus der Masse der Transportvorrichtung selbst muss überwunden werden. Vorteilhaft ergibt sich auch eine sehr hygienische Ausführung, da bspw. auf Federelemente verzichtet werden kann, wenn gewünscht, und weniger schwer zugängliche Stellen (z. B. Ritzen) zur Ansiedlung von Bakterien vorhanden sind. Bevorzugt kann sich ebenfalls eine sehr große Bauteilminimierung und damit einhergehende Komplexitätsminimierung ergeben, da bspw. keine Rollen, Schaltstangen, Gleitfolien, Rollenachsen und/oder Federn mehr benötigt werden. Insgesamt kann mit der verbesserten Klammervorrichtung eine technische Aufwertung in Richtung High-End realisiert werden. Letztlich ist noch zu erwähnen, dass die Klammervorrichtung auf sehr einfach Weise ermöglicht, auch konturierte Behälter (Konturbehälter) sicher zu greifen und zu halten.

In einem Ausführungsbeispiel sind die erste Antriebseinheit und die zweite Antriebseinheit unabhängig voneinander ansteuerbar, vorzugsweise pneumatisch. Alternativ oder zusätzlich sind das erste Klammerarmpaar mittels der ersten Antriebseinheit und das zweite Klammerarmpaar mittels der zweiten Antriebseinheit unabhängig voneinander betätigbar. Vorteilhaft kann damit eine unabhängige Bewegung der Klammerarmpaare ermöglicht werden, was bspw. zum sicheren und verschleißarmen Transportieren von Konturbehältern genutzt werden kann.

In einem weiteren Ausführungsbeispiel ist mindestens eine von der ersten Antriebseinheit und der zweiten Antriebseinheit eine pneumatische Antriebseinheit, vorzugsweise ein pneumatischer Stellantrieb. Vorteilhaft kann damit eine einfache, bauraumgünstige und zuverlässige Implementierung der Antriebseinheiten ermöglicht werden.

In einem weiteren Ausführungsbeispiel ist eine Haltekraft, ein Öffnungszeitpunkt, ein Schließzeitpunkt und/oder ein Verstellweg des ersten Klammerarmpaares mittels der ersten Antriebseinheit und/oder des zweiten Klammerarmpaares mittels der zweiten Antriebseinheit variabel verstellbar, vorzugsweise pneumatisch. Vorteilhaft kann damit beispielsweise ohne ein Umrüsten während des Betriebs oder während einer Betriebspause die Haltekraft, der Öffnungszeitpunkt, der Schließzeitpunkt und/oder der Verstellweg des ersten Klammerarmpaares und/oder des zweiten Klammerarmpaares verstellt werden. Vorteilhaft kann damit bspw. eine Übergabe und ein Halten der Behälter in Abhängigkeit vom Behälterformat optimiert werden. Allgemein kann ein vollflexibler Betrieb der Klammervorrichtung ermöglicht werden.

In einem weiteren Ausführungsbeispiel weist die Klammervorrichtung eine (z. B. pneumatische) Steuereinheit zum Steuern der ersten Antriebseinheit und/oder der zweiten Antriebseinheit auf. Vorzugsweise kann die Steuereinheit dazu konfiguriert sein, mindestens eine von der ersten Antriebseinheit und der zweiten Antriebseinheit in unterschiedlichen Modi zu betreiben. Vorteilhaft können die unterschiedlichen Modi das herkömmlich notwendige, aufwendige Umrüsten usw. ersetzen und damit insgesamt eine erhöhte Leistung ermöglichen und einen flexiblen Betrieb fördern.

Bevorzugt kann sich der Begriff "Steuereinheit" auf eine pneumatische Steuerung (zum Beispiel mit pneumatischen (z. B. Proportional-) Ventil(en), die beispielsweise pneumatisch ansteuerbar sind) beziehen. Die "Steuereinheit" kann je nach Ausbildung Steuerungsaufgaben und/oder Regelungsaufgaben und/oder Verarbeitungsaufgaben übernehmen. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

In einer Ausführungsform unterscheiden sich die unterschiedlichen Modi zumindest teilweise in Bezug auf eine Haltekraft, einen Öffnungszeitpunkt, einen Schließzeitpunkt und/oder einen Verstellweg des jeweiligen Klammerarmpaares. Vorteilhaft können die unterschiedlichen Modi beispielsweise vorgegebene Funktionen des Behältertransports ermöglichen, wie beispielsweise das Transportieren unterschiedlicher Behälter, eine gezielte Ausleitung von bestimmten Behältern und/oder das Verteilen der Behälter auf unterschiedliche Anschlussstationen.

In einer weiteren Ausführungsform sind die unterschiedlichen Modi zum Halten unterschiedlicher Behälter konfiguriert, wobei sich die unterschiedlichen Behälter vorzugsweise in Bezug auf ein Behältergewicht, eine Behältergröße, eine Behälterform, einen Behälterdurchmesser und/oder ein Behältermaterial unterscheiden.

In einer Ausführungsvariante ist die Wirkverbindung zwischen der ersten Antriebseinheit und dem ersten Klammerarmpaar, die Wirkverbindung zwischen der zweiten Antriebseinheit und dem zweiten Klammerarmpaar, die erste Antriebseinheit und/oder die zweite Antriebseinheit ohne ein elastisches Federelement ausgebildet ist/sind. Vorteilhaft kann damit eine konstruktiv einfache und hygienische Ausführung der Klammervorrichtung ermöglicht werden, da es möglich ist, auf Federelemente zu verzichten.

In einer weiteren Ausführungsvariante weist die Klammervorrichtung ferner einen, vorzugsweise im Wesentlichen blockförmigen und/oder länglichen, Klammerträger auf, der das erste Klammerarmpaar und/oder das zweite Klammerarmpaar bewegbar, vorzugsweise verschiebbar oder schwenkbar, trägt, besonders bevorzugt an einander entgegengesetzten Endbereichen des Klammerträgers (zum Beispiel an einem oberen Endbereich und an einem unteren Endbereich des Klammerträgers).

Vorzugsweise kann der Klammerträger hochkant orientiert sein.

In einer weiteren Ausführungsvariante ist mindestens eine von der ersten Antriebseinheit und der zweiten Antriebseinheit von dem Klammerträger getragen, vorzugsweise an einer Rückseite des Klammerträgers, die entgegengesetzt zu einer Vorderseite des Klammerträgers ist, die dem von dem ersten Klammerarmpaar und dem zweiten Klammerarmpaar haltbaren Behälter zugewandt ist. Vorteilhaft kann mindestens eine von der ersten Antriebseinheit und der zweiten Antriebseinheit derart an der Rückseite des Klammerträgers angeordnet sein, dass die erste Antriebseinheit und/oder die zweite Antriebseinheit von Behälterbruchstücken im Falle eines Behälterbruchs eines vom ersten Klammerarmpaar und vom zweiten Klammerarmpaar gehaltenen Behälters durch den Klammerträger geschützt ist.

Vorzugsweise sind das erste Klammerarmpaar und das zweite Klammerarmpaar unabhängig voneinander bewegbar, vorzugsweise verschiebbar oder schwenkbar (z. B. koaxial).

Bevorzugt sind das erste Klammerarmpaar und das zweite Klammerarmpaar baugleich und/oder im Wesentlichen spiegelsymmetrisch bezüglich einer Horizontalebene ausgebildet.

Beispielsweise können die erste Antriebseinheit und die zweite Antriebseinheit übereinander angeordnet, baugleich, im Wesentlichen spiegelsymmetrisch bezüglich einer Horizontalebene ausgebildet und/oder von einem Klammerträger der Klammervorrichtung getragen sein.

Vorzugsweise kann die erste Antriebseinheit und/oder die zweite Antriebseinheit ein verschiebbares Ausgabeelement aufweisen.

Besonders bevorzugt kann eine lineare Vorschub- und Rückschubbewegung des Ausgabeelements der ersten Antriebseinheit durch ein Kniehebelgelenk in eine Schwenkbewegung des ersten Klammerarmpaares umgewandelt werden.

Alternativ oder zusätzlich kann eine lineare Vorschub- und Rückschubbewegung des Ausgabeelements der zweiten Antriebseinheit durch ein Kniehebelgelenk in eine Schwenkbewegung des zweiten Klammerarmpaares umgewandelt werden.

Es ist möglich, dass ein Ausgabeelement der ersten Antriebseinheit und/oder ein mit dem Ausgabeelement verbundenes Übertragungselement sich verschiebbar durch einen Klammerträger der Klammervorrichtung erstreckt. Alternativ oder zusätzlich kann sich ein Ausgabeelement der zweiten Antriebseinheit und/oder ein mit dem Ausgabeelement verbundenes Übertragungselement sich verschiebbar durch einen Klammerträger der Klammervorrichtung erstrecken.

In einer weiteren Ausführungsvariante weist das erste Klammerarmpaar zwei erste, vorzugsweise miteinander gekoppelte, Klammerarme zum Anlegen an den Behälter auf, die vorzugsweise gegensinnig zueinander bewegbar, bevorzugt schwenkbar oder verschiebbar, sind. Alternativ oder zusätzlich weist das zweite Klammerarmpaar zwei zweite, vorzugsweise miteinander gekoppelte, Klammerarme zum Anlegen an den Behälter auf, die vorzugsweise gegensinnig zueinander (und bspw. unabhängig von den zwei ersten Klammerarmen) bewegbar, bevorzugt schwenkbar oder verschiebbar sind (z. B. koaxial schwenkbar zu den zwei ersten Klammerarmen).

In einem Ausführungsbeispiel weist die Klammervorrichtung ferner zwei erste Schwenkarme, die V-förmig angeordnet, in Reaktion auf eine mechanische Eingabe mittels der ersten Antriebseinheit hin- und herverschiebbar und/oder an je einem Klammerarm des ersten Klammerarmpaares schwenkbar angebracht sind. Alternativ oder zusätzlich weist die Klammervorrichtung ferner zwei zweite Schwenkarme auf, die V-förmig angeordnet, in Reaktion auf eine mechanische Eingabe mittels der zweiten Antriebseinheit hin- und herverschiebbar und/oder an je einem Klammerarm des zweiten Klammerarmpaares schwenkbar angebracht sind.

In einem weiteren Ausführungsbeispiel sind die zwei ersten Schwenkarme, vorzugsweise koaxial, schwenkbar an einem verschiebbaren ersten Übertragungselement angebracht, das in einem Klammerträger der Klammervorrichtung verschiebbar gelagert ist, stangenförmig ist und/oder von der ersten Antriebseinheit verschiebbar ist. Alternativ oder zusätzlich sind die zwei zweiten Schwenkarme, vorzugsweise koaxial, schwenkbar an einem verschiebbaren zweiten Übertragungselement angebracht, das in einem Klammerträger der Klammervorrichtung verschiebbar gelagert ist, stangenförmig ist und/oder von der zweiten Antriebseinheit verschiebbar ist.

Bevorzugt kann ein Ausgabeelement der ersten Antriebseinheit mit dem ersten Übertragungselement (z. B. direkt) verbunden sein, z. B. aneinander befestigt oder integral-einstückig miteinander ausgebildet. Alternativ oder zusätzlich kann ein Ausgabeelement der zweiten Antriebseinheit mit dem zweiten Übertragungselement (z. B. direkt) verbunden sein, z. B. aneinander befestigt oder integral-einstückig miteinander ausgebildet.

Ein weiterer Aspekt der vorliegenden Offenbarung betrifft eine Transportvorrichtung, vorzugsweise drehbarer Klammerstern, für Behälter für eine Behälterbehandlungsanlage. Die Transportvorrichtung weist mindestens eine Klammervorrichtung wie hierin offenbart auf. Die Transportvorrichtung kann optional ferner einen Drehverteiler aufweisen, der mit mindestens einer von der ersten Antriebseinheit und der zweiten Antriebseinheit verbunden ist, vorzugsweise pneumatisch. Die Transportvorrichtung kann vorteilhaft die gleichen Vorteile erzielen, die bereits für die Klammervorrichtung beschrieben wurden.

Vorzugsweise kann die Behälterbehandlungsanlage zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel ausgeführt sein.

Beispielsweise können die Behälter als Flaschen, Dosen, Kanister, Kartons, Flakons usw. ausgeführt sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Ansicht einer Klammervorrichtung gemäß einem Ausführungsbeispiel der vorliegenden Offenbarung;
- Figur 2: eine Schnittansicht durch die beispielhafte Klammervorrichtung von Figur 1;
- Figur 3: eine Draufsicht auf die beispielhafte Klammervorrichtung von Figur 1;
- Figur 4: eine perspektivische Ansicht einer Transportvorrichtung gemäß einem Ausführungsbeispiel der vorliegenden Offenbarung;
- Figur 5: eine Schnittansicht durch die beispielhafte Transportvorrichtung von Figur 4; und
- Figur 6: eine Ansicht von unten auf die beispielhafte Transportvorrichtung von Figur 4.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

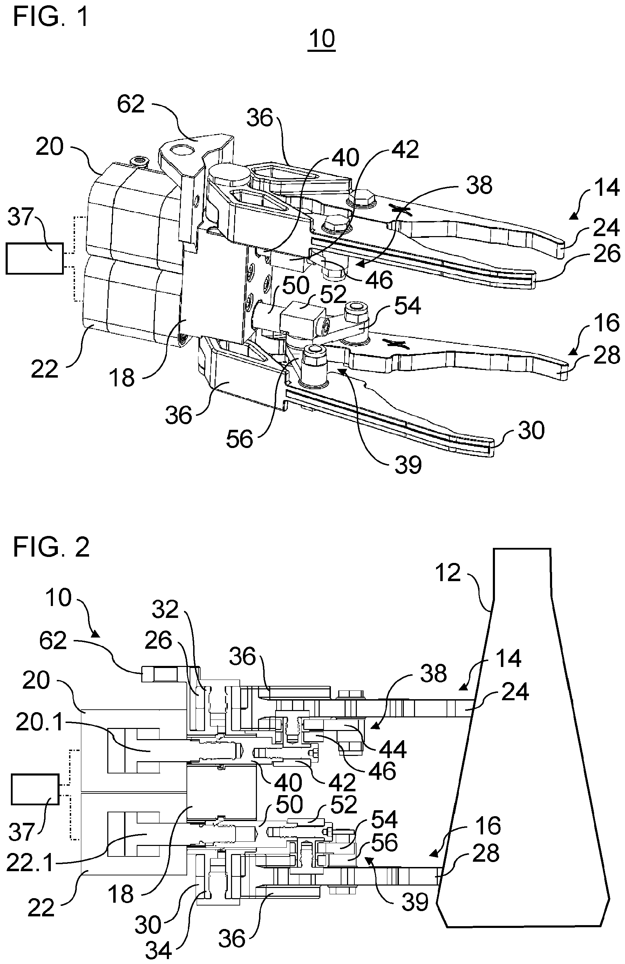

Die Figuren 1 bis 3 zeigen eine Klammervorrichtung 10 in unterschiedlichen Ansichten. Die Klammervorrichtung 10 kann einen Behälter 12 (nur in Figur 2 schematisch dargestellt) halten bzw. greifen. Der Behälter 12 kann einen Behälterkörper mit unterschiedlichen Außenumfängen entlang seiner Länge bzw. Höhe aufweisen. Beispielsweise kann der Behälter 12 als ein sogenannter Konturbehälter ausgeführt sein. Es ist auch möglich, dass der Behälterkörper des Behälters 12 eine andere Form aufweist, z. B eine zylindrische Form.

Die Klammervorrichtung 10 weist ein erstes Klammerarmpaar 14 und ein zweites Klammerarmpaar 16 auf. Die Klammervorrichtung 10 weist ferner eine erste Antriebseinheit 20, eine zweite Antriebseinheit 22 und optional einen Klammerträger 18 auf.

Vorzugsweise ist die Klammervorrichtung 10 als eine Doppel-Klammervorrichtung bzw. eine doppelstöckige Klammervorrichtung mit den beiden Klammerarmpaaren 14, 16 ausgeführt. Es ist allerdings auch möglich, dass die Klammervorrichtung weitere Klammerarmpaare (nicht dargestellt) aufweist. Allgemein kann die Klammervorrichtung 10 als eine Mehrfach-Klammervorrichtung bzw. mehrstöckige Klammervorrichtung mit mehreren Klammerarmpaaren 14, 16 ausgeführt sein.

Das erste Klammerarmpaar 14 kann zwei erste Klammerarme 24, 26 aufweisen. Das zweite Klammerarmpaar 16 kann zwei zweite Klammerarme 28, 30 aufweisen. Die Klammerarme 24 und 26 (bzw. 28 und 30) können separat ausgebildet sein, wie in den Figuren 1 und 2 dargestellt ist. Es ist möglich, dass die Klammerarme 24 und 26 (bzw. 28 und 30) integral-einstückig miteinander ausgebildet sind. Es ist auch möglich, dass weitere Klammerarme umfasst sind.

Vorzugsweise kann das zweite Klammerarmpaar 16 im Wesentlichen baugleich und/oder funktionsgleich zu dem ersten Klammerarmpaar 14 ausgeführt sein. Bevorzugt sind das erste Klammerarmpaar 14 und das zweite Klammerarmpaar 16 im Wesentlichen spiegelsymmetrisch bezüglich einer Mittellängsebene der Klammervorrichtung 10 bzw. bezüglich einer Horizontalebene (im montierten Zustand) ausgebildet. Die Mittellängsebene teilt die Klammervorrichtung 10 auf halber Höhe und kann bspw. parallel zu Längsachsen oder Ausrichtungsebenen der Klammerarmpaare 14, 16 verlaufen.

Die Klammerarmpaare 14, 16 können jeweils schwenkbar gelagert sein, wie dargestellt ist. Die schwenkbare Lagerung ist bevorzugt an einem Ende der Klammerarmpaare 14, 16 entgegengesetzt zu dem Behälter 12 bzw. den freien Enden der Klammerarmpaare 14, 16 angeordnet. Die Klammerarmpaare 14, 16 können bevorzugt koaxial zueinander verschwenkbar sein bzw. um eine gemeinsame Schwenkachse schwenkbar sein. Es ist allerdings auch möglich, dass das Klammerarmpaar 14 und/oder 16 verschiebbar gelagert ist.

Im Einzelnen können die ersten Klammerarme 24, 26 bevorzugt gegensinnig zueinander bewegbar, vorzugsweise schwenkbar (wie dargestellt) oder verschiebbar sein. Die zweiten Klammerarme 28, 30 können gegensinnig zueinander bewegbar, vorzugsweise schwenkbar (wie dargestellt) oder verschiebbar, sein. Zum Halten des Behälters 12 können die ersten Klammerarme 24, 26 bis zum Anlegen an den Behälter 12 zueinander bewegt (z. B geschwenkt oder verschoben) werden, und die zweiten Klammerarme 28, 30 können bis zum Anlegen an den Behälter 12 zueinander bewegt (z. B. geschwenkt oder verschoben) werden. Zum Freigeben des Behälters 12 können die ersten Klammerarme 24, 26 voneinander wegbewegt (z.B. weggeschwenkt oder wegverschoben) werden, und die zweiten Klammerarme 28, 30 können voneinander wegbewegt (z.B. weggeschwenkt oder wegverschoben) werden.

Das erste und zweite Klammerarmpaar 14, 16 sind zum gleichzeitigen Halten desselben Behälters 12 übereinander angeordnet. Das erste und zweite Klammerarmpaar 14, 16 sind bspw. bezüglich einer Hochachse des Behälters 12 oder der Klammervorrichtung 10 vertikal versetzt zueinander angeordnet. Beispielsweise ist das erste Klammerarmpaar 14 / die zwei ersten Klammerarme 24, 26) oberhalb von dem zweiten Klammerarmpaar 16 / den zwei zweiten Klammerarmen 28, 30 angeordnet, wie in den Figuren 1 bis 3 dargestellt ist, oder umgekehrt.

Das erste Klammerarmpaar 14 kann den Behälter 12 an einem ersten Außenumfangsabschnitt bzw. Mantelabschnitt halten. Das zweite Klammerarmpaar 16 kann den Behälter 12 an einem zweiten Außenumfangsabschnitt bzw. Mantelabschnitt halten. Der erste und zweite Außenumfangsabschnitt ist bevorzugt jeweils umlaufend bzw. in sich geschlossen. Die Außenumfangsabschnitte sind bezüglich einer Hochachse des Behälters 12 versetzt zueinander angeordnet. Beispielsweise ist der erste Außenumfangsabschnitt oberhalb von dem zweiten Außenumfangsabschnitt angeordnet oder umgekehrt.

Es ist möglich, dass der erste Außenumfangsabschnitt und der zweite Außenumfangsabschnitt sich in einer Form und/oder einer Größe bzw. Länge voneinander unterscheiden. Im dargestellten Ausführungsbeispiel ist beispielsweise die Form des ersten Außenumfangsabschnitts und des zweiten Außenumfangsabschnitts gleich, nämlich kreisrund bezüglich eines Behälterquerschnitts oder kegelstumpfförmig bezüglich der Hochachse des Behälters. Der erste und zweite Außenumfangsabschnitt unterscheiden sich in der Größe. Der erste Außenumfangsabschnitt weist einen kleineren Umfang und einen kleineren Durchmesser als der zweite Außenumfangsabschnitt auf.

Der Behälter 12 kann jeweils an den vorderen bzw. dem Behälter 12 zugewandten Abschnitten der Klammerarmpaare 14, 16 gehalten sein. Im Einzelnen kann der Behälter 12 zwischen den freien Enden der ersten Klammerarme 24, 26 und zwischen den freien Enden der zweite Klammerarme 28, 30 gehalten sein. Die ersten Klammerarme 24, 26 und die zweiten Klammerarme 28, 30 können den Behälter 12 an ihren freien Enden umgreifen. Die ersten Klammerarme 24, 26 und die zweiten Klammerarme 28, 30 können den Behälter 12 zwischen ihren freien Enden unter Aufbringung einer Haltekraft einklemmen. Die Haltekraft des ersten Klammerarmpaares 14 kann durch die erste Antriebseinheit 20 bewirkt sein. Die Haltekraft des zweiten Klammerarmpaares 16 kann durch die zweite Antriebseinheit 22 bewirkt sein.

Die beiden Klammerarmpaare 14, 16 können unabhängig bzw. entkoppelt voneinander bewegbar, vorzugsweise schwenkbar oder verschiebbar, sein. Das erste Klammerarmpaar 14 kann bewegt (z. B. verschwenkt oder verschoben) werden, ohne dass das zweite Klammerarmpaar 16 sich mitbewegt und umgekehrt. Eine Anlageschwenkbewegung oder Anlageverschiebbewegung des ersten Klammerarmpaares 14 an den Behälter 12 kann bspw. eine Anlageschwenkbewegung oder Anlageverschiebbewegung des zweiten Klammerarmpaares 16 an den Behälter 12 nicht beeinflussen und umgekehrt. Die Anlageschwenkbewegung oder Anlageverschiebbewegung des zweiten Klammerarmpaares 16 kann bspw. andauern, während das erste Klammerarmpaar 14 bereits an dem Behälter anliegt und umgekehrt (z. B. abhängig von einer Form und/oder Größe der Außenumfangsabschnitte des Behälters). Bspw. können die Klammerarmpaare 14, 16, vorzugsweise unter Wirkung einer der Antriebseinheiten 20 und 22, die Anlagebewegung gleichzeitig beginnen und/oder nacheinander beenden (z. B. jeweils zum Zeitpunkt der Anlage an den Behälter 12). Bei der Anlageschwenkbewegung können die jeweilige Klammerarme 24, 26 bzw. 28, 30 aufeinander zu schwenken, wohingegen bei der Anlageverschiebebewegung die jeweiligen Klammerarme 24, 26 bzw. 28, 30 zueinander verschoben werden können.

Eine Freigabebewegung (z. B. Freigabeschwenkbewegung oder Freigabeverschiebebewegung) des zweiten Klammerarmpaares 16 weg von dem Behälter 12 kann bevorzugt eine Freigabeschwenkbewegung des ersten Klammerarmpaares 14 weg von dem Behälter 12 nicht beeinflussen und umgekehrt. Die Freigabebewegung des ersten Klammerarmpaares 14 kann bspw. beginnen, bevor die Freigabebewegung des zweiten Klammerarmpaares 16 beginnt und umgekehrt (z. B. abhängig von einer Form und/oder Größe der Außenumfangsabschnitte des Behälters 12). Bspw. können die Klammerarmpaare 14, 16, vorzugsweise unter Wirkung einer Betätigung der Klammerarmpaare 14 und 16 mittels der Antriebseinheiten 20, 22, die Freigabebewegung gleichzeitig beenden. Bei der Freigabeschwenkbewegung können die jeweilige Klammerarme 24, 26 bzw. 28, 30 voneinander wegschwenken, wohingegen bei der Freigabeverschiebebewegung die jeweiligen Klammerarme 24, 26 bzw. 28, 30 weg voneinander verschoben werden können.

Die Klammerarmpaare 14, 16 können jeweils eine Längsachse aufweisen. Die Längsachsen können im Wesentlichen parallel zueinander verlaufen. Die Längsachsen können im Wesentlichen senkrecht zu einer Hochachse der Klammervorrichtung 10 oder des Behälters 12 verlaufen. Im montierten Zustand können die Längsachsen im Wesentlichen parallel zu einer Horizontalebene verlaufen.

Die Klammerarmpaare 14, 16 können an dem Klammerträger 18 bewegbar, vorzugsweise schwenkbar oder verschiebbar, gelagert sein. Die Klammerarmpaare 14, 16 können auf entgegengesetzten Seiten des Klammerträgers 18 an dem Klammerträger 18 gelagert sein. Der Klammerträger 18 kann zwischen den Klammerarmpaaren 14, 16 angeordnet sein, vorzugsweise bezüglich einer Hochachse der Klammervorrichtung 10. Der Klammerträger 18 kann die Klammerarmpaare 14, 16 tragen. Der Klammerträger 18 ist vorzugsweise blockförmig ausgeführt. Der Klammerträger 18 erstreckt sich vorzugsweise länglich parallel zur Hochachse des Behälters 12 oder der Klammervorrichtung 10.

Beispielsweise können die Klammerarmpaare 14, 16 jeweils mittels eines, vorzugsweise länglichen, Drehzapfens 32, 34 des Klammerträgers 18 schwenkbar gelagert sein. Im Einzelnen können die Klammerarme 24, 26, 28, 30 jeweils ein Durchgangsloch aufweisen, z. B. an einem der jeweils freien Enden entgegengesetzten Ende des jeweiligen Klammerarms 24, 26, 28, 30. Die Drehzapfen 32, 34 können sich durch die Durchgangslöcher erstrecken. Es ist möglich, dass Gleitbuchsen zwischen den Drehzapfen 32, 34 und den Durchgangslöchern angeordnet sind.

Die Drehzapfen 32, 34 können sich koaxial zu einer Schwenkachse der Klammerarmpaare 14, 16 bzw. der Klammerarme 24, 26, 28, 30 erstrecken. Die Drehzapfen 32, 34 können sich parallel zu einer Hochachse der Klammervorrichtung 10 oder des Behälters 12 erstrecken. Die Drehzapfen 32, 34 können auf entgegengesetzten Seiten des Klammerträgers 18 angeordnet sein. Beispielsweise kann der Drehzapfen 32 an einer Oberseite des Klammerträgers 18 angeordnet sein. Der Drehzapfen 34 kann an einer Unterseite des Klammerträgers 18 angeordnet sein.

Die ersten Klammerarme 24, 26 können übereinander auf den Drehzapfen 32 aufgesteckt sein. Die zweiten Klammerarme 28, 30 können übereinander auf den Drehzapfen 34 aufgesteckt sein. Die ersten Klammerarme 24, 26 können axial auf dem Drehzapfen 32 gesichert sein. Die zweiten Klammerarme 28, 30 können axial auf dem Drehzapfen 34 gesichert sein. Die jeweilige axiale Sicherung kann bspw. mittels eines Schraubenkopfes einer Schraube erfolgen, die in ein (z. B. Zentral-) Loch im Drehzapfen 32, 34 eingeschraubt ist, vorzugsweise koaxial zur Schwenkachse der Klammerarmpaare 14, 16 bzw. der Klammerarme 24, 26, 28, 30.

Angrenzend an die schwenkbare Lagerung zum Klammerträger 18 können die Klammerarmpaare 14, 16 verstärkt sein. Im Einzelnen kann eine Materialstärke der Klammerarme 24, 26, 28, 30 angrenzend an die schwenkbare Lagerung vergrößert sein. Die Klammerarme 24, 26, 28, 30 können bspw. Verstärkungsrippen 36 angrenzend an die schwenkbare Lagerung aufweisen. Die Verstärkungsrippen 36 können bspw. als Wandelemente auf einer Oberseite und/oder einer Unterseite der Klammerarme 24, 26, 28, 30 ausgeführt sein. Die Wandelemente können ringförmige bzw. umlaufende Strukturen sein. Die Verstärkungsrippen 36 können im Abschnitt der Klammerarme 24, 26, 28, 30 angeordnet sein, die den freien Enden der Klammerarme 24, 26, 28, 30 entgegengesetzt sind. Die Verstärkungsrippen 36 können sich in Richtung zu den freien Enden der Klammerarme 24, 26, 28, 30 verjüngen.

Es ist möglich, dass die Klammerarme 24 und 26 sowie 28 und 30 bspw. in deren Mittelabschnitten (bezüglich der jeweiligen Längsachsen) einander zugewandte Anschläge aufweisen. An den Anschlägen können die Klammerarme 24 und 26 sowie 28 und 30 in der Schließstellung aneinander anliegen, wenn sie keinen Behälter 12 halten.

Die Klammerarmpaare 14, 16 können von den Antriebseinheiten 20, 22 bewegt werden. Die Antriebseinheiten 20, 22 können die Bewegung der Klammerarmpaare 14, 16 antreiben. Im Einzelnen ist die erste Antriebseinheit 20 zum Betätigen, z. B. Öffnen und/oder Schließen, des ersten Klammerarmpaares 14 in Wirkverbindung mit dem ersten Klammerarmpaar 14. Die zweite Antriebseinheit 22 ist zum Betätigen, z. B. Öffnen und/oder Schließen, des zweiten Klammerarmpaares 16 in Wirkverbindung mit dem zweiten Klammerarmpaar 16. Bevorzugt können die Klammerarmpaare 14, 16 von den Antriebseinheiten 20, 22 geschwenkt werden. Besonders bevorzugt können die Antriebseinheiten 20, 22 die Klammerarmpaare 14, 16 derart antrieben, dass diese zum Schließen schwenken, um den Behälter 12 festzuhalten bzw. zu übernehmen, und zum Öffnen schwenken, um den gehaltenen Behälter 12 freizugeben. Wie erwähnt ist es jedoch auch möglich, dass die Klammerarmpaar 14, 16 verschiebbar statt verschwenkbar sind. Entsprechend können die Antriebseinheiten 20, 22 die Klammerarmpaare 14, 16 dann derart antrieben, dass diese verschoben werden.

Die Antriebseinheiten 20, 22 sind bevorzugt pneumatische Antriebseinheiten. Vorzugsweise sind die Antriebseinheiten 20, 22 als Stellantriebe bzw. Stellmotoren ausgeführt. Bevorzugt sind die Antriebseinheiten 20, 22 Linearantriebseinheiten.

Die erste Antriebseinheit 20 kann ein erstes Ausgabeelement 20.1 aufweisen. Die zweite Antriebseinheit 22 ein zweites Ausgabeelement 22.1 aufweisen. Das erste Ausgabeelement 20.1 kann das erste Klammerarmpaar 14 bewegen. Das zweite Ausgabeelement 22.1 kann das zweite Klammerarmpaar 16 bewegen. Bevorzugt sind die Ausgabeelemente 20.1 und 22.1 linear bewegbar bzw. verschiebbar.

Die Antriebseinheiten 20, 22 können beispielsweise als pneumatische Zylinder-Kolben-Einheiten ausgeführt sein. Der Kolben kann hin- und herbewegbar in dem Zylinder aufgenommen sein. Der Kolben kann das Ausgabeelement 20.1, 22.1 der jeweiligen Antriebseinheit 20, 22 sein. Eine Zufuhr von Druckluft zu einer Kolbenkammer im Zylinder kann den Kolben in einer ersten Richtung bewegen, zum Beispiel zum Ausfahren aus dem Zylinder. Eine Zufuhr von Druckluft zu einer Ringkammer im Zylinder kann den Kolben in einer der ersten Richtung entgegengesetzten zweiten Richtung bewegen, zum Beispiel zum Einfahren in den Zylinder.

Die Antriebseinheiten 20, 22 können bevorzugt einen maximal begrenzten Hub für das jeweilige Ausgabeelement 20.1, 22.1 aufweisen, um bspw. einen maximal möglichen Behälterdurchmesser greifbar zu machen.

Die Antriebseinheiten 20, 22 können bspw. pneumatisch angesteuert werden. Vorzugsweise können die Antriebseinheiten 20, 22 unabhängig voneinander ansteuerbar sein.

Es ist möglich, dass bspw. eine Haltekraft, ein Öffnungszeitpunkt, ein Schließzeitpunkt und/oder ein Verstellweg des ersten Klammerarmpaares 14 mittels der ersten Antriebseinheit 20 und/oder des zweiten Klammerarmpaares 16 mittels der zweiten Antriebseinheit 22 variabel verstellbar ist. Die variable Verstellung kann bevorzugt im laufenden Betrieb erfolgen und/oder bspw. kein Umrüsten erfordern.

Zum Ansteuern der Antriebseinheiten 20, 22 kann eine Steuereinheit 37 (nur schematisch in den Figuren 1 und 2 dargestellt) umfasst sein. Die Steuereinheit 37 ist bevorzugt eine pneumatische Steuereinheit.

Die Steuereinheit 37 kann zum (An-) Steuern der Antriebseinheiten 20, 22 mit den Antriebseinheiten 20, 22 beispielsweise pneumatisch verbunden sein. Besonders bevorzugt ist die pneumatische Verbindung zwischen der Steuereinheit 37 und der ersten Antriebseinheit 20 separat bzw. unabhängig von der pneumatischen Verbindung zwischen der Steuereinheit 37 und der zweiten Antriebseinheit 22 ausgeführt. Beispielsweise kann die Steuereinheit 37 pneumatisch mit einem Kolbenraum und/oder einem Ringraum der ersten Antriebseinheit 20 und mit einem Kolbenraum und/oder einem Ringraum der zweiten Antriebseinheit 22 verbunden sein.

Die Steuereinheit 37 ist bevorzugt zum Ansteuern mehrerer Antriebseinheiten 20, 22 von mehreren Klammervorrichtungen 10 einer Transportvorrichtung, z. B. eines Klammersterns, verbunden.

Die Steuereinheit 37 kann die erste Antriebseinheit 20 und/oder die zweite Antriebseinheit 22 vorzugsweise in unterschiedlichen Modi betreiben. Zwischen den Modi kann im Betrieb oder in einer Betriebspause umgeschaltet werden. Das Umschalten der Modi ist möglich, ohne dass ein Umrüsten der Klammervorrichtung 10 oder der Transportvorrichtung, die die Klammervorrichtung 10 umfasst, notwendig ist.

Die unterschiedlichen Modi können sich beispielsweise darin unterscheiden, dass eine von der jeweiligen Antriebseinheit 20, 22 bewirkte Haltekraft des jeweiligen Klammerarmpaares 14, 16, ein von der jeweiligen Antriebseinheit 20, 22 bewirkter Schließzeitpunkt des jeweiligen Klammerarmpaares 14, 16, ein von der jeweiligen Antriebseinheit 20, 22 bewirkter Öffnungszeitpunkt des jeweiligen Klammerarmpaares 14, 16 und/oder ein von der jeweiligen Antriebseinheit 20, 22 bewirkter Verstellweg des jeweiligen Klammerarmpaares 14, 16 in den unterschiedlichen Modi zumindest teilweise unterschiedlich ist.

Die unterschiedlichen Modi können beispielsweise zum Halten unterschiedlicher Behälter 12 konfiguriert und eingesetzt werden. Beispielsweise können die unterschiedlichen Modi ermöglichen, dass Behälter 12 mit unterschiedlichen Behältergewichten, unterschiedlichen Behältergrößen, unterschiedlicher Behälterformen, unterschiedlichen Behälterdurchmessern und/oder unterschiedlichen Behältermaterialien von der Klammervorrichtung 10 sicher übernommen, gehalten und freigegeben werden können. Es ist auch möglich, dass die unterschiedlichen Modi zum unterschiedlichen Fahren bzw. Betreiben der Anlage bzw. der Transportvorrichtung, die die Klammervorrichtung 10 umfasst, eingesetzt werden.

Die Antriebseinheiten 20, 22 sind bevorzugt baugleich und/oder funktionsgleich ausgebildet. Bevorzugt sind die erste Antriebseinheit 20 und die zweite Antriebseinheit 22 im Wesentlichen spiegelsymmetrisch bezüglich der Mittellängsebene der Klammervorrichtung 10 bzw. bezüglich einer Horizontalebene (im montierten Zustand) ausgebildet.

Die Antriebseinheiten 20, 22 können übereinander angeordnet sein. Die Antriebseinheiten 20, 22 können an dem Klammerträger 18 getragen sein. Bevorzugt sind die Antriebseinheiten 20, 22 geschützt auf einer Rückseite des Klammerträgers 18 angeordnet, die dem Behälter 12 abgewandt ist.

Es ist möglich, dass die Antriebseinheiten 20, 22 direkt mit den Klammerarmpaaren 14, 16 verbunden sind bzw. in Wirkverbindung stehen. Alternativ können die Antriebseinheiten 20, 22 bspw. mittels einer jeweiligen Verbindungseinrichtung 38, 39 mit den Klammerarmpaaren 14, 16 verbunden sein bzw. in Wirkverbindung stehen. Die erste Verbindungseinrichtungen 38 kann die erste Antriebseinheit 20 antreibend mit dem ersten Klammerarmpaar 14 verbinden. Die zweite Verbindungseinrichtung 39 kann die zweite Antriebseinheit 22 antreibend mit dem zweiten Klammerarmpaar 16 verbinden.

Die Verbindungseinrichtung 38, 39 können zwischen dem ersten Klammerarmpaar 14 und dem zweiten Klammerarmpaar 16 angeordnet sein, vorzugsweise bezüglich einer Hochachse der Klammervorrichtung 10. Im Einzelnen kann die zweite Verbindungseinrichtung 39 zumindest teilweise auf einer Oberseite des zweiten Klammerarmpaares 16 angeordnet sein. Die erste Verbindungseinrichtung 38 kann zumindest teilweise auf einer Unterseite des ersten Klammerarmpaares 14 angeordnet sein. Eine jeweilige Längserstreckungsrichtung der Verbindungseinrichtung 38, 39 kann sich im Wesentlichen parallel zu den Längsachsen der Klammerarmpaare 14, 16 erstrecken.

Die Verbindungseinrichtung 38, 39 können von dem Klammerträger 18 getragen sein. Die Verbindungseinrichtung 38, 39 können sich zumindest teilweise durch den Klammerträger 18 erstrecken, vorzugsweise in Durchgangslöchern, die sich von einer Rückseite bzw. einer dem Behälter 12 abgewandten Seite des Klammerträgers 18 zu einer Vorderseite bzw. einer dem Behälter 12 zugewandten Seite des Klammerträgers 18 erstrecken.

Die Verbindungseinrichtungen 38, 39 können bevorzugt entkoppelt voneinander sein, sodass sie sich unabhängig voneinander bewegen können. Die erste Verbindungseinrichtung 38 kann sich bewegen, ohne dass sich die zweite Verbindungseinrichtung 39 bewegt und umgekehrt.

Die erste Verbindungseinrichtung 38 kann in einem Abschnitt zwischen den freien Enden und der (z. B. Schwenk) Lagerung der ersten Klammerarme 24, 26 mit den ersten Klammerarmen 24, 26 verbunden sein, vorzugsweise in Mittelabschnitten der ersten Klammerarme 24, 26 bezüglich der jeweiligen Längsachse. Die zweite Verbindungseinrichtung 39 kann in einem Abschnitt zwischen den freien Enden und der (z. B. Schwenk) Lagerung der zweiten Klammerarme 28, 30 mit den zweiten Klammerarmen 28, 30 verbunden sein, vorzugsweise in Mittelabschnitten der zweiten Klammerarme 28, 30 bezüglich der jeweiligen Längsachse.

Die erste Verbindungseinrichtung 38 kann vorzugsweise ein Übertragungselement 40, ein Koppelelement 42 und zwei Schwenkarme 44, 46 aufweisen. Es ist möglich, dass die Komponenten 40, 42, 44, 46 zumindest teilweise ineinander integriert sind. Die zweite Verbindungseinrichtung 39 kann mit einem Übertragungselement 50, einem Koppelelement 52 und zwei Schwenkarmen 54, 56 wie die erste Verbindungseinrichtung 38 aufgebaut sein und funktionieren. Die nachfolgenden Detailausführungen zu der ersten Verbindungseinrichtung 38 können somit, mutatis mutandis, entsprechend für die zweite Verbindungseinrichtung 39 gelten.

Das Übertragungselement 40 kann verschiebbar in dem Klammerträger 18 gelagert, vorzugsweise in einer Gleitbuchse. Das Übertragungselement 40 kann länglich, vorzugsweise stangenförmig, sein. Das Übertragungselement 40 kann von dem ersten Ausgabeelement 20.1 verschoben werden, vorzugsweise parallel zu der Längsachse des ersten Klammerarmpaares 14. Das Übertragungselement 40 kann vorzugsweise endseitig an dem ersten Ausgabeelement 20.1 angebracht sein. Das Übertragungselement 40 kann das Koppelelement 42 tragen, vorzugsweise an einem Ende, das dem ersten Ausgabeelement 20.1 entgegengesetzt ist.

Das Koppelelement 42 kann an dem Übertragungselement 40 angebracht sein, vorzugsweise stirnseitig. Beispielsweise kann das Koppelelement 42 mittels einer Schraube an dem Übertragungselement 40 angebracht sein. Wird das Übertragungselement 40 verschoben, kann das Koppelelement 42 mitverschoben werden. Das Koppelelement 42 kann das Übertragungselement 40 mit den Schwenkarmen 44, 46 koppeln.

Der Schwenkarm 44 kann den Klammerarm 24 mit dem Koppelelement 42 verbinden. Der Schwenkarm 44 kann an einem Ende schwenkbar mit dem Koppelelement 42 verbunden sein, z. B. mittels eines Bolzens oder Drehzapfens. Der Schwenkarm 44 kann an einem entgegengesetzten Ende schwenkbar mit dem Klammerarm 24 verbunden sein, z. B. mittels eines Bolzens oder Drehzapfens.

Der Schwenkarm 46 kann den Klammerarm 26 mit dem Koppelelement 42 verbinden. Der Schwenkarm 46 kann an einem Ende schwenkbar mit dem Koppelelement 42 verbunden sein, z. B. mittels eines Bolzens oder Drehzapfens. Der Schwenkarm 46 kann an einem entgegengesetzten Ende schwenkbar mit dem Klammerarm 26 verbunden sein, z. B. mittels eines Bolzens oder Drehzapfens.

Die Schwenkarme 44, 46 sind bevorzugt V-förmig und/oder übereinander (z. B. bezüglich einer Hochachse der Klammervorrichtung 10) angeordnet. Die Schwenkarme 44, 46 sind vorzugsweise koaxial bezüglich des Koppelelements 42 schwenkbar. Es sind allerdings bspw. auch parallele Schwenkachsen für die Schwenkarme 44, 46 bezüglich des Koppelelements 42 möglich. Die Schwenkarme 44, 46 können bezüglich einer Hochachse der Klammervorrichtung 10 vorzugsweise zwischen dem Koppelelement 42 bzw. dem Übertragungselement 40 und dem ersten Klammerarmpaar 14 angeordnet sein.

Eine mechanische Eingabe durch das erste Ausgabeelement 20.1 der ersten Antriebseinheit 20 kann eine Verschiebung des Übertragungselements 40 in Richtung zu oder weg von dem Behälter 12 bewirken. Eine Verschiebung des Übertragungselements 40 in Richtung zu oder weg von dem Behälter 12 kann eine Verschiebung des Koppelelements 42 in Richtung zu oder weg von dem Behälter 12 bewirken. Eine Verschiebung des Koppelelements 42 in Richtung zu oder weg von dem Behälter 12 kann eine Verschiebung der mit dem Koppelelement 42 schwenkbar verbundenen Enden der Schwenkarme 44, 46 in Richtung zu oder weg von dem Behälter 12 bewirken. Eine Verschiebung der schwenkbar mit dem Koppelelement 42 verbundenen Enden der Schwenkarme 44, 46 kann ein Schwenken der Schwenkarme 44, 46 an diesen Enden, da die Schwenkarme 44, 46 an den Klammerarmen 24, 26 abgestützt sind, bewirken. Das Schwenken der Schwenkarme 44, 46 bewirkt ein Schwenken der Klammerarme 24, 26, z. B. ein Aufschwenken bzw. Öffnen der Klammerarme 24, 26 zum Freigeben des Behälters 12 oder ein Zuschwenken bzw. Schließen der Klammerarme 24, 26 zum Ergreifen des Behälters 12.

Das Übertragungselement 40, das Koppelelement 42, die Schwenkarme 44, 46 und die Klammerarme 24, 26 können bevorzugt zusammen einen Kniehebel bzw. ein Kniehebelgelenk bilden.

Bevorzugt weisen die Klammerarmpaare 14, 16, die Antriebseinheiten 20, 22 und die Verbindungseinrichtungen 38, 39 keine elastischen Federelemente auf. Es ist allerdings prinzipiell auch möglich, dass bspw. die Antriebseinheiten 20, 22 ein elastisches Federelement aufweisen, sodass das Ausgabeelement 20.1, 22.1 bspw. in Richtung zu einer Öffnungsstellung oder einer Schließstellung vorgespannt ist.

Die Klammervorrichtung 10 kann eine Befestigungseinrichtung 62 aufweisen. Die Befestigungseinrichtung 62 kann dazu ausgebildet sein, die Klammervorrichtung 10 an einer Transportvorrichtung, z. B. einem Transportkarussell, zu befestigen, z. B. mittels einer Schraubverbindung. Die Befestigungseinrichtung 62 kann mindestens ein Positionierelement aufweisen. Das Positionierelement kann die Klammervorrichtung 10 bei der Befestigung an der Transportvorrichtung korrekt an der Transportvorrichtung positionieren. Das Positionierelement kann bspw. als ein Positionierstift ausgeführt sein. Die Befestigungseinrichtung 62 kann an dem Klammerträger 18 befestigt sein, z. B. an einer Rückseite, Oberseite und/oder Unterseite des Klammerträgers 18.

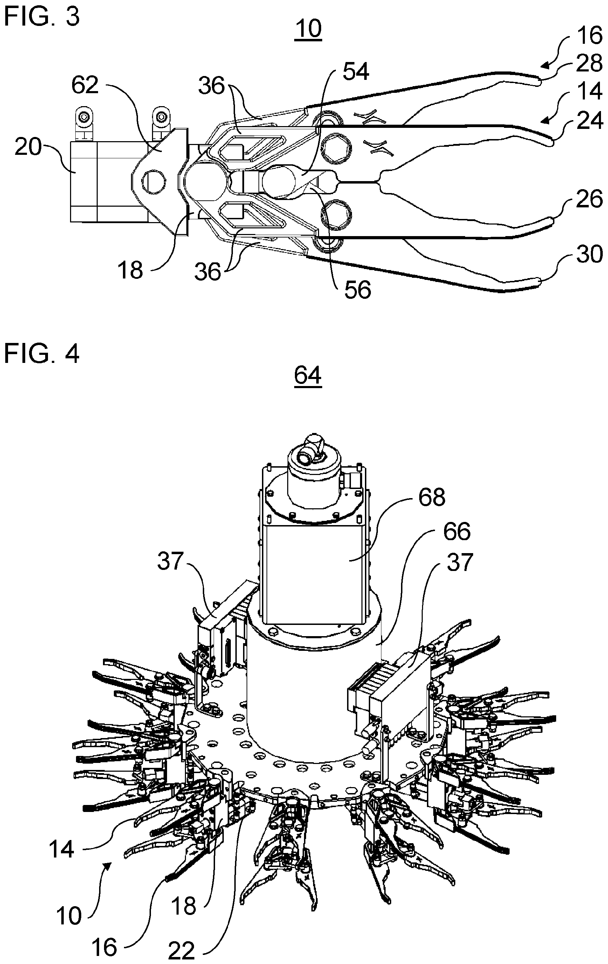

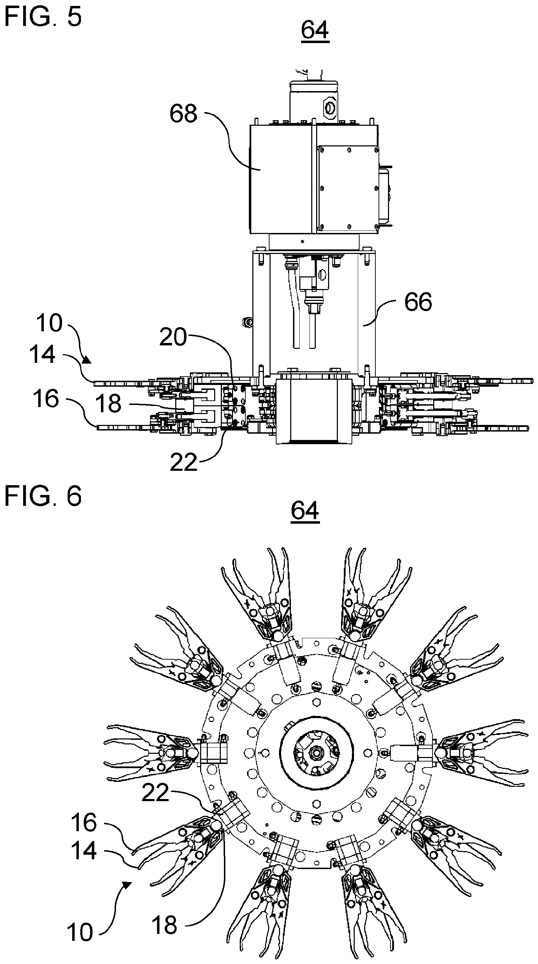

Die Figuren 4 bis 6 zeigen unterschiedliche Ansichten einer Transportvorrichtung 64 mit mehreren Klammervorrichtungen 10. Der besseren Übersicht halber ist lediglich eine Klammervorrichtung 10 usw. mit einem Bezugszeichen versehen.

Die Transportvorrichtung 64 kann bevorzugt in einer Behälterbehandlungsanlage zum Transportieren von Behältern 12 umfasst sein. In der Behälterbehandlungsanlage können die Behälter 12 beispielsweise hergestellt, gereinigt, geprüft, abgefüllt, verschlossen, etikettiert, bedruckt und/oder verpackt werden. Es ist möglich, dass die Transportvorrichtung 64 beispielsweise als ein Einlaufstern oder ein Auslaufstern einer Behälterbehandlungsvorrichtung angeordnet ist.

Die Transportvorrichtung 64 ist bevorzugt als ein drehbares Transportkarussell ausgeführt. Die Klammervorrichtungen 10 sind, vorzugsweise gleichmäßig, um einen Umfang der Transportvorrichtung 64 herum angeordnet. Die Transportvorrichtung 64 kann als ein sogenannter Klammerstern ausgeführt sein. Aufgrund der Doppelstöckigkeit der Klammervorrichtungen 10 ist der Klammerstern als doppelstöckiger Klammerstern ausgeführt.

Die Transportvorrichtung 64 kann eine Antriebseinheit 66 und einen Drehverteiler bzw. eine Drehdurchführung 68 aufweisen.

Mittels der Antriebseinheit 66 kann die Transportvorrichtung 64 und damit die Klammervorrichtungen 10 bewegt werden. Bevorzugt kann die Antriebseinheit 66 die Transportvorrichtung 64 und damit die Klammervorrichtungen 10 um eine Mittelvertikalachse der Transportvorrichtung 64 drehen. Die Antriebseinheit 66 kann je nach Konfiguration beispielsweise an einer Oberseite oder einer Unterseite der Transportvorrichtung 64 angeordnet sein.

Der Drehverteiler 68 kann mit der ersten Antriebseinheit 20 und der zweiten Antriebseinheit 22 verbunden sein. Der Drehverteiler 68 kann beispielsweise eine pneumatische Schnittstelle aufweisen, die eine pneumatische Verbindung zwischen einem sich drehenden Teil des Drehverteilers 68 und einem feststehenden Teil des Drehverteilers 68 ermöglicht. Beispielsweise kann das Gehäuse des Drehverteilers 68 feststehend sein. Ein innerhalb des Gehäuses angeordnetes Teil des Drehverteilers 68 kann wiederum drehbar gelagert sein und sich mit der drehenden Transportvorrichtung 64 im Betrieb mitdrehen.

Der Drehverteiler 68 kann dazu ausgebildet sein, mindestens einem Fluid einen abgedichteten Übergang zwischen einem feststehenden Körper und einem rotierenden Körper zu ermöglichen. Der Drehverteiler 68 kann einflutig (einkanalig oder einspurig) oder mehrflutig (mehrkanalig oder mehrspurig) sein. Bevorzugt weist der Drehverteiler 68 (mindestens) eine Pneumatik-Flut oder - Spur für Druckluft auf, die mit den Antriebseinheiten 20, 22 verbunden oder verbindbar ist. Optional kann der Drehverteiler 68 bspw. eine Produkt- bzw. Füllgut-Flut oder -Spur für ein abzufüllendes Produkt aufweisen, nämlich z. B. dann, wenn die Transportvorrichtung 64 in einem Füller integriert ist.

Je nach Ausführung kann in der Verbindung zwischen dem Drehverteiler68 und den Antriebseinheiten 20, 22 die Steuereinheit 37 angeordnet sein. Alternativ kann die Steuereinheit 37 nicht zwischen dem Drehverteiler 68 und den Antriebseinheiten 20, 22 verbunden bzw. zwischengeschaltet sein. Im dargestellten Ausführungsbeispiel von Figur 4 ist die Steuereinheit 37 als eine pneumatische Steuereinheit ausgeführt und weist beispielsweise mindestens eine (z. B. zwei) pneumatische Ventilinsel auf, mit der eine Zufuhr von Druckluft zu den Antriebseinheiten 20, 22 (zum Beispiel zu deren Kolbenräumen und/oder Ringräumen) gesteuert werden kann. Beispielhaft ist die mindestens eine Ventilinsel an einer Oberseite der Transportvorrichtung 64 angeordnet.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des ersten Klammerarmpaares, des zweiten Klammerarmpaares, der ersten Antriebseinheit und/oder der zweiten Antriebseinheit des unabhängigen Anspruchs 1 offenbart.

**Bezugszeichenliste**

| | | | |
|---|---|---|---|
| 10 | Klammervorrichtung | 37 | Steuereinheit |
| 12 | Behälter | 38 | erste Verbindungseinrichtung |
| 14 | erstes Klammerarmpaar | 39 | zweite Verbindungseinrichtung |
| 16 | zweites Klammerarmpaar | 40 | Übertragungselement |
| 18 | Klammerträger | 42 | Koppelelement |
| 20 | erste Antriebseinheit | 44 | Schwenkarm |
| 20.1 | erstes Ausgabeelement | 46 | Schwenkarm |
| 22 | zweite Antriebseinheit | 50 | Übertragungselement |
| 22.1 | zweites Ausgabeelement | 52 | Koppelelement |
| 24 | Klammerarm | 54 | Schwenkarm |
| 26 | Klammerarm | 56 | Schwenkarm |
| 28 | Klammerarm | 62 | Befestigungseinrichtung |
| 30 | Klammerarm | 64 | Transportvorrichtung |
| 32 | Drehzapfen | 66 | Antriebseinheit |
| 34 | Drehzapfen | 68 | Drehverteiler |
| 36 | Verstärkungsrippe | | |

## Patentansprüche

1. Klammervorrichtung (10) zum Halten eines Behälters (12) für eine Behälterbehandlungsanlage, aufweisend:
ein erstes Klammerarmpaar (14) und ein zweites Klammerarmpaar (16), die zum gleichzeitigen Halten des Behälters (12) übereinander angeordnet sind;
eine erste Antriebseinheit (20), die zum Betätigen des ersten Klammerarmpaares (14) in Wirkverbindung mit dem ersten Klammerarmpaar (14) ist; und
eine zweite Antriebseinheit (22), die zum Betätigen des zweiten Klammerarmpaares (16) in Wirkverbindung mit dem zweiten Klammerarmpaar (16) ist.

2. Klammervorrichtung (10) nach Anspruch 1, wobei:
die erste Antriebseinheit (20) und die zweite Antriebseinheit (22) unabhängig voneinander ansteuerbar sind, vorzugsweise pneumatisch; und/oder
das erste Klammerarmpaar (14) mittels der ersten Antriebseinheit (20) und das zweite Klammerarmpaar (16) mittels der zweiten Antriebseinheit (22) unabhängig voneinander betätigbar sind.

3. Klammervorrichtung (10) nach Anspruch 1 oder Anspruch 2, wobei:
mindestens eine von der ersten Antriebseinheit (20) und der zweiten Antriebseinheit (22) eine pneumatische Antriebseinheit, vorzugsweise ein pneumatischer Stellantrieb, ist.

4. Klammervorrichtung (10) nach einem der vorherigen Ansprüche, wobei:
eine Haltekraft, ein Öffnungszeitpunkt, ein Schließzeitpunkt und/oder ein Verstellweg des ersten Klammerarmpaares (14) mittels der ersten Antriebseinheit (20) und/oder des zweiten Klammerarmpaares (16) mittels der zweiten Antriebseinheit (22) variabel verstellbar ist, vorzugsweise pneumatisch.

5. Klammervorrichtung (10) nach einem der vorherigen Ansprüche, ferner aufweisend:
eine Steuereinheit (37) zum Steuern der ersten Antriebseinheit (20) und/oder der zweiten Antriebseinheit (22), wobei die Steuereinheit (37) dazu konfiguriert ist, mindestens eine von der ersten Antriebseinheit (20) und der zweiten Antriebseinheit (22) in unterschiedlichen Modi zu betreiben.

6. Klammervorrichtung (10) nach Anspruch 5, wobei:
die unterschiedlichen Modi sich zumindest teilweise in Bezug auf eine Haltekraft, einen Öffnungszeitpunkt, einen Schließzeitpunkt und/oder einen Verstellweg des jeweiligen Klammerarmpaares (14, 16) unterscheiden.

7. Klammervorrichtung (10) nach Anspruch 5 oder Anspruch 6, wobei:
die unterschiedlichen Modi zum Halten unterschiedlicher Behälter (12) konfiguriert sind, wobei sich die unterschiedlichen Behälter (12) in Bezug auf ein Behältergewicht, eine Behältergröße, eine Behälterform, einen Behälterdurchmesser und/oder ein Behältermaterial unterscheiden.

8. Klammervorrichtung (10) nach einem der vorherigen Ansprüche, wobei:
die Wirkverbindung zwischen der ersten Antriebseinheit (20) und dem ersten Klammerarmpaar (14), die Wirkverbindung zwischen der zweiten Antriebseinheit (22) und dem zweiten Klammerarmpaar (16), die erste Antriebseinheit (20) und/oder die zweite Antriebseinheit (22) ohne ein elastisches Federelement ausgebildet ist/sind.

9. Klammervorrichtung (10) nach einem der vorherigen Ansprüche, ferner aufweisend:
einen, vorzugsweise im Wesentlichen blockförmigen und/oder länglichen, Klammerträger (18), der das erste Klammerarmpaar (14) und das zweite Klammerarmpaar (16) bewegbar, vorzugsweise verschiebbar oder schwenkbar, trägt, vorzugsweise an einander entgegengesetzten Endbereichen des Klammerträgers (18).

10. Klammervorrichtung (10) nach Anspruch 9, wobei:
mindestens eine von der ersten Antriebseinheit (20) und der zweiten Antriebseinheit (22) von dem Klammerträger (18) getragen ist, vorzugsweise an einer Rückseite des Klammerträgers (18), die entgegengesetzt zu einer Vorderseite des Klammerträgers (18) ist, die dem von dem ersten Klammerarmpaar (14) und dem zweiten Klammerarmpaar (16) haltbaren Behälter (12) zugewandt ist.

11. Klammervorrichtung (10) nach einem der vorherigen Ansprüche, wobei:
das erste Klammerarmpaar (14) zwei erste, vorzugsweise miteinander gekoppelte, Klammerarme (24, 26) zum Anlegen an den Behälter (12) aufweist, die gegensinnig zueinander bewegbar, vorzugsweise schwenkbar oder verschiebbar, sind; und/oder
das zweite Klammerarmpaar (16) zwei zweite, vorzugsweise miteinander gekoppelte, Klammerarme (28, 30) zum Anlegen an den Behälter (12) aufweist, die gegensinnig zueinander bewegbar, vorzugsweise schwenkbar oder verschiebbar sind.

12. Klammervorrichtung (10) nach einem der vorherigen Ansprüche, ferner aufweisend:
zwei erste Schwenkarme (44, 46), die V-förmig angeordnet, in Reaktion auf eine mechanische Eingabe mittels der ersten Antriebseinheit (20) hin- und herverschiebbar und an je einem Klammerarm (24, 26) des ersten Klammerarmpaares (14) schwenkbar angebracht sind; und/oder
zwei zweite Schwenkarme (54, 56), die V-förmig angeordnet, in Reaktion auf eine mechanische Eingabe mittels der zweiten Antriebseinheit (22) hin- und herverschiebbar und an je einem Klammerarm (28, 30) des zweiten Klammerarmpaares (16) schwenkbar angebracht sind

13. Klammervorrichtung (10) nach Anspruch 12, wobei:
die zwei ersten Schwenkarme (44, 46), vorzugsweise koaxial, schwenkbar an einem verschiebbaren ersten Übertragungselement (40) angebracht sind, das in einem Klammerträger (18) der Klammervorrichtung (10) verschiebbar gelagert ist, stangenförmig ist und von der ersten Antriebseinheit (20) verschiebbar ist; und/oder
die zwei zweiten Schwenkarme (54, 56), vorzugsweise koaxial, schwenkbar an einem verschiebbaren zweiten Übertragungselement (50) angebracht sind, das in einem Klammerträger (18) der Klammervorrichtung (10) verschiebbar gelagert ist, stangenförmig ist und von der zweiten Antriebseinheit (22) verschiebbar ist.

14. Transportvorrichtung (64), vorzugsweise drehbarer Klammerstern, für Behälter (12) für eine Behälterbehandlungsanlage, aufweisend:
mindestens eine Klammervorrichtung (10) nach einem der vorherigen Ansprüche, und optional
einen Drehverteiler (68), der mit mindestens einer von der ersten Antriebseinheit (20) und der zweiten Antriebseinheit (22) verbunden ist, vorzugsweise pneumatisch.
